# EUROPEAN PATENT SPECIFICATION

(11) **EP 1 144 561 B1**
(45) Date of publication and mention of the grant of the patent: **07.05.2003**
(21) Application number: 00905513.8
(22) Date of filing: 14.02.2000
(51) Int. Cl.: C11B 1/00

(54) **A PROCESS OF OBTAINING NATURAL ANTIOXIDANTS FROM PLANTS**
VERFAHREN ZUR GEWINNUNG VON NATÜRLICHEN ANTIOXIDANTIEN AUS PFLANZEN
PROCEDE PERMETTANT D'OBTENIR DES ANTIOXYDANTS NATURELS A PARTIR DES PLANTES

(30) Priority: 16.02.1999 SI 9900034
(43) Date of publication of application: 17.10.2001
(73) Proprietor: Pinus D.D., 62327 Race (SI)
(72) Inventor: Bauman, Davorin, 2327 Race (SI); Knez, Zeljko, 2000 Maribor (SI); Murko, Stanislav, 2000 Maribor (SI); Rostohar, Zarko, 2000 Maribor (SI)
(74) Representative: von Füner, Nicolai, Dr.
(86) International application number: SI0000001
(87) International publication number: WO00049115

(56) References cited:
- WO-A-93/06190
- US-A- 3 950 266
- US-A- 4 380 506
- US-A- 4 450 097
- US-A- 4 877 635
- US-A- 5 026 550

## Description

### Technical Field of Invention

This invention relates to the field of chemical technology, specifically to a new process for the obtaining of natural antioxidants from plants.

The obtained products are of supreme quality, due to the high contents of the antioxidative constituents. The tehnical method applied, is less exacting than all hitherto described.

### State of the Art

Oils and fats are members of the lipid group. Primarily, they are differentiated according to their origin, and in a lesser extent according to their melting points. At room temperature, oils are liquid and are predominantly extracted from plants. On the other hand, fats are solid or semisolid, and are generally of animal origin. External agents (oxygen, light, heat, ) cause a relatively rapid deterioration of the fats, and diminish their physiological and nutritional value in a considerable extent. The most frequent cause for the deterioration of fats is autooxidation.

The autooxidation may be inhibited by means of:
1. impeding the access, and the removal of oxygen,
2. the storage of fats at low temperature and in a dark place,
3. the removal of metal ions, and
4. the addition of antioxidants.

A more detailed description of the chemical transformations in the autooxidation process, is presented in the introductory part of the patent SI 9600104.

Autooxidants are organic substances, added to other substances with the aim to retard their oxidation. The shelf-life of fats is thus prolonged.

A detailed description of the antioxidant types and their action is presented in SI 9600104.

### 1.1.1 Labiatae antioxidants:

Rosemary *(Rosmarinus),* sage *(Salvia),* thyme *(Thymus)* are classified in the *Labiatae* family. *Labiatae* are annual or perennial herbs, shrubs or bushes. This family, including about 3500 plants (for example peppermint, sage, balm-mint), is widely distributed in all climate regions, especially in the Mediterranean Basin and in Central Asia.

*Labiatae* contain a large amount of isoprenoidal substances in the form of monoterpenes (essential oils), sesquiterpenes, diterpenes (bitter principles), and triterpenes.

Some components of the essential oils exhibit an anti- and some a pro-oxidant effect. It is therefore desired, that the contents of essential oils in the antioxidative extracts are kept as low as possible. Furtheron, the predominant odour and flavour (taste) of the essetial oils prevails in the products, containing *Labiatae* extracts.

Important active constituents of rosemary are also the following: tannins, rosmaric acid, bitter principles (carnosol, carnosic acid), triterpenes (ursolic acid), flavones (luteolin, apigenine, .....).

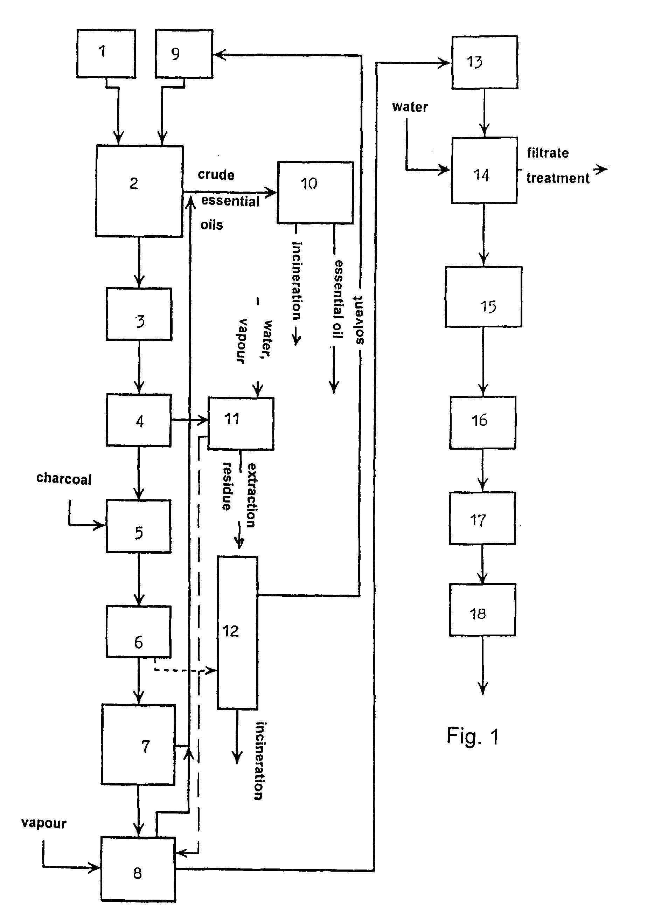

The antioxidant action of rosemary is caused by phenolic diterpenes. The strongest action is exhibited by carnosol, yielding *via* oxidation the carnosic acid of a slightly diminished activity. Antioxidant action is exhibited by rosmanol, rosmaridiphenol and rosemariquinone as well. The chemical formulae of said active substances are represented on Fig. 1.

Chemically closely similar compounds are sage and thyme antioxidants.

Fat stabilizing compositions have been claimed in numerous patents (EP 658316 A1 950621 - Nestle, JP 55018436800208 - Tokio Tanabe Co., JP 55018437800208 - Tokio Tanabe Co., JP 57159874 A2 821002 - Takasago Perfumery, JP 590309279 A2 840303 - Hasegawa), or cosmetics (CH 641829 A 840315 - Nestle), and described in publications (J.Lölinger, Lipid Technology April-June 1991 pp 58.). The use of cell cultures of *Labiatae* in the obtaining of substrates, exhibiting a higher antioxidant contents was described in JP 62032889 A2 870212 - Hasegawa. The isolation of rosmaridiphenol from rosemary was described in US 4,638,095 A 870120 - Research Corp.

The use of alcohols in the isolation of antioxidative components was described in JP 59075978 A2 840428 - Hasegawa and in the publication J.W. Wu *et al*., JAOCS Vol. 59, No. 8, pp 339.

The processes described in the patent specifications US 3,950,266 - Rutgers Research, US 4,877,635 - Kalamazoo, applied in the first stage a low boiling solvent, which was subsequently separated from the extract solution by means of evaporation; in the following, second stage the aromatic constituents were separated by the addition of a substantially non-volatile solvent. The obtained products exhibited a relatively low antioxidative activity.

US 4,877,635 described a process for the isolation of antioxidants by means of organic solvents. The process for the separation of the non-antioxidative constituents was, however, rather complicated.

The extraction of antioxidants was feasible with fatty acid glicerides (C6 - C12) as well; EP 639336 A1 95022 - Nestle, and US 3,732,111 - Campbell Soup. Co., and the use of oils with the addition of non-polar solvents (EP 507064 A2 921007), the publication Tateo, Fellin M. Perfumer & Flavorist Vol 13, Dec. 1988, pp 49.

All extracts obtained by means of organic solvents or glicerides, contained several by-products, which caused an undesirable predominant odour and flavour of the product, and a low antioxidant activity, respectively.

The process described in DE 4207739 SKW Trostberg was performed in such a manner, that the aromatic constituents were extracted from rosemary by means of supercritical CO₂, at a pressure between 80 and 300 bar, and at a temperature between 10 and 80 °C. The residual plant material, containing the antioxidative compounds, was extracted with (C1-C4) alcohols.

The process required relatively large-sized extractors for the supercritical extraction of rosemary, performed at relatively high pressures and temperatures. The process claimed in EP 93103772 - SKW, was performed in the same manner as the process claimed in DE 4207739 SKW Trostberg. The separation of the bitter principles from the antioxidant concentrate, however, was effected with ethanol.

The application of supercritical CO₂ was described in the publication Z.Djarmati *et al*. JAOCS Vol 68, No 10, 1991, pp 731, and in the following patents: JP 06065573 A2 940308 Heisei, and Norac EP 0454097 A1 (Norac Technologies), US 5,120,558 (Norac Technologies).

The process of isolation with the aid of supercritical CO₂ yielded superior products, containing a relatively high proportion of antioxidative constituents. There remained, however, components impairing the product by their undesirable, predominant odour and flavour. There was also a need for relatively large and thus costly apparatus for the subcritical extraction.

SI 9600104 described a process, in which the extract solution was concentrated, and the concentrate subsequently subjected to the treatment with subcritical fluids.

US-A-3 950 266 discloses a process to obtain antioxidants from rosemary and sage by extraction and steam distillation.

### Description of the Solution of the Tecnical Problem, and Working Examples

Our new research shows that the isolation of high quality antioxidants from plant raw material, especially *Labiatea,* is feasible with the aid of various solvents and water.

The object of this invention is a new process for the obtaining of natural antioxidants from plants, consisting of:
a. the extraction of the disintegrated plant material with an organic solvent or a mixture of solvents, at a temperature of 0 to 100 °C, the subsequent rapid cooling, and the separation of the essential oils;
b. the treatment of the extracted plant residue with water or water vapour;
c. the evaporation of the solvent or the mixture of solvents;
d. the isolation of the antioxidative constituents, performed by saturation of the concentrated solution with an inert gas, and the expansion of the concentrated saturated extract solution;
e. the distillation of the concentrated solution with water vapour;
f. the cooling of the suspension of the extracted antioxidative constituents, and the separation of the mother liquor;
g. the drying of the extract containing the antioxidative constituents.

The products obtained are of supreme quality, owing to the extremely high contents of the antioxidative constituents. The manufacturing technique is less exacting than all hitherto disclosed.

In principle, all antioxidant containing plant raw materials may be used as raw materials in the claimed process. In the following disclosure is discussed plant material belonging to the *Labiatae* group, originating preferably from rosemary, sage and thyme.

The results of comparative analyses of several prior art products, with the products obtained by the claimed process, show a highly enhanced activity of the antioxidants obtained by the claimed process in comparison with synthetic antioxidants, as well as with natural antioxidants obtained by prior art processes (RAPS & Co, D-Kulmbach and Nutrilo Gesellschaft für Lebensmitteltechnologie m.b.H., D-Cuxhaven, Naturex, and the like).

By analysis (HPLC), it was established, that the extracts yielded by the claimed process contained 40%w/w polyphenols. Usually, the proportion of polyphenols in the extracts is between 2.8 to not more than 29.5 %w/w. It may be concluded, that the new claimed process yields extracts of supreme quality. A further advantage of the antioxidants obtained by this process, is also their total lack of flavour and odour. The process is also simpler and more energy efficient as all prior art methods.

In the extraction of antioxidant components from plant material, specifically Labiatae, we applied several different solvents (or mixtures thereof), in conformance with the EC Council Directive No. 84/344/EEC.

The claimed process for the obtaining of antioxidants from plants is performed in such a manner, that dried plant material (humidity contents 5 - 11 %) is milled and then dosed into an extractor. Added are 2-30 L of the solvent per 1 kg of the plant material, and extracted by stirring in a 1500 L reactor for 1 to 20 hours, at the boiling temperature of the solvent or the mixture of the solvents, or at a temperature of between 0 and 100 °C. After the first extraction stage the second stage is initiated, and is performed at equal conditions as the first stage.

After the completion of each extraction, the suspension is cooled in the shortest time possible to a temperature between 0 and 30 °C.

The total extract solution is then filtered, in order to separate the solid parts. The filtrate is fed into a vacuum evaporator (P_{abs} 0.05-0.95 bar), to evaporate the solvent, which may be recycled to the process.

To the concentrate is added activated charcoal: 1-250 g of activated charcoal per 1L of the concentrate. The stirring is maintained for 1-20 hours, and then the concentrate is filtered.

After the evaporation the concentrate is fed into an absorption column, in which the extract solution is saturated with nitrogen or another inert gas at a superpressure of 0.1-0.5 bar. This solution is then expanded to atmospheric pressure in the following reactor. This results in the partial evaporation of the solvent and essential oils. Such a process is especially indicated for the fractionation of thyme or sage extracts. Rosemary is not significantly influenced by this process stage.

In the continuation of the process is performed the distillation with water vapour. The distillate containing the solvent, water and the essential oil, is discarded. The distillation residue is filtered, and the precipitate on the filter is washed with water. Then the extract is dried in a fluidized layer drier at a temperature between 10 and 95 °C.

Represented is the Reaction Scheme of the claimed technical process for the obtaining of antioxidants from rosemary (Fig. 1).

The influence of the solvent type was assessed by means of liquid chromatography, and the antioxidant activity by the measurement of the peroxide value of the oils, incorporating the product obtained by the claimed process.

In the obtaining of antioxidative components were used several different plant materials of the *Labiatae group.* The antioxidant activity of the extracts obtained from rosemary, sage and thyme is, however, the strongest.

The process for the isolation of the antioxidative constituents is described in a more detailed manner in Examples 1-9. The yielded products exhibit a low content of aromatic components, and are thus high-quality products.

### Description of Fig. 1 (Reaction Scheme)

1 - Raw-material preparation
2 - Single- or two-stage extraction
3 - Cooling
4 - Extraction residue separation
5 - Dye separation
6 - Evaporation
7 - Saturation (gas saturation, expansion (superpressure))
8 - Water vapour distillation
9 - Solvents preparation
10 - Essential oils treatment
11 - Extraction residue treatment
12 - Rectification
13 - Crystallization
14 - Filtration
15 - Drying (fluidized layer)
16- Milling
17 - Formulation
18 - Packaging

### Working Example 1:

Dried rosemary (humidity 7.1%) was milled, and then dosed into a 1500 L extractor. Added were 5 L of ethanol per 1 kg of rosemary, and extracted under stirring for 3 hours at the boiling temperature of ethanol. After the termination of the first extraction stage was initiated the second extraction stage, and performed at the same reaction conditions as the first stage. The solution was cooled to 8 °C, filtered, and thus separated the solid particles. The filtrate was fed into a mixer, and there added 40 g of activated charcoal per 1 L of the extract. The mixture was stirred for 10 hours at a temperature of 20 °C. It was filtered, and then the filtrate was fed into a vacuum evaporator (P_{abs}=0.50 bar), where the solvent was evaporated. The concentrate was fed into a column, in which the extract solution was saturated with nitrogen at a pressure of 0.25 bar. This solution was then expanded to atmospheric pressure. The residue was fed into an evaporator, in which the distillation with water vapour was performed. To this solution was added the solution or condensate (about 200 L), obtained in the extraction residue treatment.

The distillate containing ethanol, water and the essential oil, was discarded. The distillation residue was filtered and the filter precipitate washed with water. The extract was then dried in a fluidized layer drier at a temperature of 60 °C.

The mass of the final product was 5.6 %w/w with respect to the mass of dry rosemary. It was light brown coloured, and flavour free as well as odour free. The contents of the antioxidant constituents in the extract were 39.9 % (HPLC).

### Working Example 2:

Dried rosemary (humidity 7.1%) was milled, and then dosed into a 1500 L extractor. Added were 4.5 L of ethanol per 1 kg of rosemary, and extracted under stirring for 3 hours at the boiling temperature of ethanol. After the termination of the first extraction stage, the second extraction stage was started, and then performed at the same reaction conditions as the first stage. The solution was cooled to 7 °C, filtered, and thus separated the solid particles. The filtrate was fed into a mixer, and there added 41 g of activated charcoal per 1 L of the extract. The mixture was stirred for 10 hours at a temperature of 20 °C. It was filtered, and then the filtrate was fed into a vacuum evaporator (P_{abs}=0.50 bar), where the solvent was evaporated. The residue was distilled with water vapour. To this solution was added the solution or condensate (about 200 L), obtained in the extraction residue treatment.

The distillate containing ethanol, water and the essential oil, was discarded. The distillation residue was filtered, and then the filter precipitate washed with water. The extract was then dried in a fluidized layer drier at a temperature of 60 °C.

The mass of the final product was 5.7 %w/w with respect to the mass of dry rosemary. It was light brown, and flavour free as well as odour free. The contents of the antioxidant constituents in the extract were 39.6 % (HPLC).

### Working Example 3:

Dried sage (residual humidity 6.9%) was milled, and then dosed into an extractor. Added were 12 L of ethanol per 1 kg of sage, and extracted under stirring for 4 hours at the boiling temperature. After the termination of the first extraction stage was initiated the second extraction stage, and performed at the same reaction conditions as the first stage. The solution was cooled to 0 °C, filtered, and thus separated the solid particles. The filtrate was fed into a mixer, and there added 100g of activated charcoal per 1 L of the extract. The mixture was stirred for 16 hours at a temperature of 15 °C. It was filtered, and then the filtrate was fed into a vacuum evaporator (P_{abs}=0.15 bar), where the solvent was evaporated. The concentrate was fed into a column, in which the extract solution was saturated with nitrogen at a pressure of 0.15 bar. This solution was then expanded to atmospheric pressure. The residue was fed into an evaporator, in which the distillation with water vapour was performed. To this solution was added the solution or condensate (about 215 L), obtained in the extraction residue treatment.

The distillate containing ethanol, water and the essential oil, was discarded. The distillation residue was filtered and the filter precipitate washed with water. The extract was then dried in a fluidized layer drier at a temperature of 60 °C.

The mass of the final product was 4.9 %w/w with respect to the mass of dry sage. It was light brown coloured, and flavour free as well as odour free. The contents of the antioxidant constituents in the extract were 42.3 % (HPLC).

### Working Example 4:

Dried thyme (residual humidity 7.2%) was milled, and then dosed into a 1500 L extractor. Added were 7 L of ethanol per 1 kg of thyme, and extracted under stirring for 4 hours at the boiling temperature of ethanol. After the termination of the first extraction stage was initiated the second extraction stage, and performed at the same reaction conditions as the first stage. The solution was cooled to 10 °C, filtered, and thus separated the solid particles. The filtrate was fed into a mixer, and there added 70g of activated charcoal per 1 L of the extract. The mixture was stirred for 6 hours at a temperature of 20 °C. It was filtered, and then the filtrate was fed into a vacuum evaporator (P_{abs}=0.10 bar), where the solvent was evaporated. The concentrate was fed into a column, in which the extract solution was saturated with nitrogen at a pressure of 0.25 bar. This solution was then expanded to atmospheric pressure. The residue was fed into an evaporator, in which the distillation with water vapour was performed. To this solution was added the solution or condensate (about 210 L), obtained in the extraction residue treatment.

The distillate containing ethanol, water and the essential oil, was discarded. The distillation residue was filtered and the filter precipitate washed with water. The extract was then dried in a fluidized layer drier at a temperature of 60 °C.

The mass of the final product was 5.3 %w/w with respect to the mass of dry thyme. It was light brown coloured, and flavour free as well as odour free. The contents of the antioxidant constituents in the extract were 40.9 % (HPLC).

### Working Example 5:

Dried rosemary (humidity 7.1%) was milled, and then dosed into a 1500 L extractor. Added were 4.5 L of ethanol per 1 kg of rosemary, and extracted under stirring for 3 hours at the temperature of 7 °C. After the termination of the first extraction stage was initiated the second extraction stage, and performed at the same reaction conditions as the first stage. The solution was filtered, and thus separated the solid particles. The filtrate was fed into a mixer, and there added 41 g of activated charcoal per 1 L of the extract. The mixture was stirred for 10 hours at a temperature of 20 °C. It was filtered, and then the filtrate was fed into a vacuum evaporator (P_{abs}=0.50 bar), where the solvent was evaporated. The residue was distilled with water vapour. To this solution was added the solution or condensate (about 200 L), obtained in the extraction residue treatment.

The distillate containing ethanol, water and the essential oil, was discarded. The distillation residue was filtered and the filter precipitate washed with water. The extract was then dried in a fluidized layer drier at a temperature of 60 °C.

The mass of the final product was 5.7 %w/w with respect to the mass of dry rosemary. It was light brown coloured, and flavour free as well as odour free. The contents of the antioxidant constituents in the extract were 39.4 % (HPLC).

### Working Example 6:

Dried rosemary (humidity 7.1%) was milled, and then dosed into a 1500 L extractor. Added were 15 L of hexane per 1 kg of rosemary, and extracted under stirring for 3 hours at the boiling temperature. After the termination of the first extraction stage was initiated the second extraction stage, and performed at the same reaction conditions as the first stage. The solution was cooled to 12 °C, filtered, and thus separated the solid particles. The filtrate was fed into a mixer, and there added 120 g of activated charcoal per 1 L of the extract. The mixture was stirred for 19 hours at a temperature of 17 °C. It was filtered, and then the filtrate was fed into a vacuum evaporator (P_{abs}=0.30 bar), where the solvent was evaporated. The concentrate was fed into a column, in which the extract solution was saturated with nitrogen at a pressure of 0.25 bar. This solution was then expanded to atmospheric pressure. The residue was fed into an evaporator, in which the distillation with water vapour was performed. To this solution was added the solution or condensate (about 200 L), obtained in the extraction residue treatment.

The distillate containing hexane, water and the essential oil, was discarded. The distillation residue was filtered and the filter precipitate washed with water. The extract was then dried in a fluidized layer drier at a temperature of 60 °C.

The mass of the final product was 3.5 %w/w with respect to the mass of dry rosemary. It was light brown coloured, and flavour free as well as odour free. The contents of the antioxidant constituents in the extract were 24.7 % (HPLC).

### Working Example 7:

Dried rosemary (humidity 7.1%) was milled, and then dosed into a 1500 L extractor. Added were 6 L of ethyl acetate per 1 kg of rosemary, and extracted under stirring for 4 hours at the boiling temperature. After the termination of the first extraction stage was initiated the second extraction stage, and performed at the same reaction conditions as the first stage. The solution was cooled to 14 °C, filtered, and thus separated the solid particles. The filtrate was fed into a mixer, and there added 80 g of activated charcoal per 1 L of the extract. The mixture was stirred for 9 hours at a temperature of 15 °C. It was filtered, and then the filtrate was fed into a vacuum evaporator (P_{abs}=0.35 bar), where the solvent was evaporated. The concentrate was fed into a column, in which the extract solution was saturated with nitrogen at a pressure of 0.25 bar. This solution was then expanded to atmospheric pressure. The residue was fed into an evaporator, in which the distillation with water vapour was performed. To this solution was added the solution or condensate (about 195 L), obtained in the extraction residue treatment.

The distillate containing ethyl acetate, water and the essential oil, was discarded. The distillation residue was filtered and the filter precipitate washed with water. The extract was then dried in a fluidized layer drier at a temperature of 60 °C.

The mass of the final product was 4.5 %w/w with respect to the mass of dry rosemary. It was light brown coloured, and flavour free as well as odour free. The contents of the antioxidant constituents in the extract were 29.6 % (HPLC).

### Working Example 8:

Dried rosemary (humidity 7.1%) was milled, and then dosed into a 1500 L extractor. Added were 9 L of cyclohexane per 1 kg of rosemary, and extracted under stirring for 4.5 hours at the boiling temperature. After the termination of the first extraction stage was initiated the second extraction stage, and performed at the same reaction conditions as the first stage. The solution was cooled to 6 °C, filtered, and thus separated the solid particles. The filtrate was fed into a mixer, and there added 80 g of activated charcoal per 1 L of the extract. The mixture was stirred for 9 hours at a temperature of 14 °C. It was filtered, and then the filtrate was fed into a vacuum evaporator (P_{abs}=0.15 bar), where the solvent was evaporated. The concentrate was fed into a column, in which the extract solution was saturated with nitrogen at a pressure of 0.15 bar. This solution was then expanded to atmospheric pressure. The residue was fed into an evaporator, in which the distillation with water vapour was performed. To this solution was added the solution or condensate (about 187 L), obtained in the extraction residue treatment.

The distillate containing cyclohexane, water and the essential oil, was discarded. The distillation residue was filtered and the filter precipitate washed with water. The extract was then dried in a fluidized layer drier at a temperature of 60 °C.

The mass of the final product was 4.3 %w/w with respect to the mass of dry rosemary. It was light brown coloured, and flavour free as well as odour free. The contents of the antioxidant constituents in the extract were 31.2 % (HPLC).

### Working Example 9:

Dried rosemary (humidity 7.1%) was milled, and then dosed into a 1500 L extractor. Added were 9 L of a solution of acetone and ethanol (volume ratio 1:1) per 1 kg of rosemary, and extracted under stirring for 4.5 hours at the boiling temperature. After the termination of the first extraction stage was initiated the second extraction stage, and performed at the same reaction conditions as the first stage. The solution was cooled to 6 °C, filtered, and thus separated the solid particles. The filtrate was fed into a mixer, and there added 80 g of activated charcoal per 1 L of the extract solution. The mixture was stirred for 9 hours at a temperature of 14 °C. It was filtered, and then the filtrate was fed into a vacuum evaporator (P_{abs}=0.15 bar), where the solvents were evaporated. The concentrate was fed into a column, in which the extract solution was saturated with nitrogen at a pressure of 0.15 bar. This solution was then expanded to atmospheric pressure. The residue was fed into an evaporator, in which the distillation with water vapour was performed. To this solution was added the solution or condensate (about 187 L), obtained in the extraction residue treatment. The absolute pressure in the evaporator was 0.85 bar.

The distillate containing acetone, ethanol, water and the essential oil, was discarded. The distillation residue was filtered and the filter precipitate washed with water. The extract was then dried in a fluidized layer drier at a temperature of 60 °C.

The mass of the final product was 4.6 %w/w with respect to the mass of dry rosemary. It was light brown coloured, and flavour free as well as odour free. The contents of the antioxidant constituents in the extract were 34.2 % (HPLC).

## Claims

1. A process of obtaining natural antioxidants from plants, **characterized in that** it consists of:
a) the extraction of the disintegrated plant material with an organic solvent or a mixture of solvents, at a temperature of 0 to 100 °C, the subsequent rapid cooling, and the separation of the essential oils;
b) the treatment of the extracted plant residue with water or water vapor;
c) the evaporation of the solvent or the mixture of solvents ;
d) the isolation of the anti-oxidative constituents, performed by the addition of charcoal to the above concentrate and stirring, followed by the saturation of the concentrated solution with an inert gas, and the expansion of the concentrated saturated extract solution;
e) the distillation of the concentrated solution with water vapor;
f) the cooling of the suspension of the extracted anti-oxidative constituents, and the separation of the mother liquor;
g) the fluidized-bed drying of the extract, that contains the anti-oxidative constituents.

2. A process as claimed in claim 1, **characterized in that** the plants are *Labiatae*.

3. A process as claimed in claim 1, **characterized in that** the plants are rosemary, sage and thyme.

4. A process as claimed in claim 1, **characterized in that** the solvents are 1-5 C (*n*- or *iso*-) alcohols, esters such as ethyl acetate, butyl acetate, ethers, ketones such as ethyl methyl ketone, dimethyl ketone, diethyl ketone, 1-12 C hydrocarbons and their halogenated derivatives, cyclic and aromatic hydrocarbons, and mixtures of all above-mentioned solvents in all proportions.

5. A process as claimed in claim 1, **characterized in that** the ratio between the solvent and the solid substance is between 2 and 30 L of the solvent per kg of the plant material.

6. A process as claimed in claim 1, **characterized in that** the extraction duration is between 1 and 20 hours.

7. A process as claimed in claim 1, **characterized in that** the process is a two-stage process.

8. A process as claimed in claim 1, **characterized in that** the extraction temperature is the boiling temperature of the solvent or solvent mixture.

9. A process as claimed in claim 1, **characterized in that** the extraction temperature is between 0 and 100 °C.

10. A process as claimed in claim 1, **characterized in that** after the extraction the suspension is cooled to a temperature between 0 and 30 °C.

11. A process as claimed in claim 1, **characterized in that** the ratio of the activated charcoal and the solution is between 1 and 250 g/L, for an activated charcoal with an active surface area between 500 and 1900 m²/g.

12. A process as claimed in claim 1, **characterized in that** the duration of the stirring is between 1 and 20 hours.

13. A process as claimed in claim 1, **characterized in that** the evaporation pressures are between P_{abs} = 0.05 and 3.00 bar.

14. A process as claimed in claim 1, **characterized in that** the extract solution is saturated with nitrogen or another inert gas at a superpressure between 0.1 and 0.5 bar.

15. A process as claimed in claim 1, **characterized in that** the gas is chosen from nitrogen, carbon dioxide, freons, or their mixtures in all proportions.

16. A process as claimed in claim 1, **characterized in that** the water vapor distillation is performed at pressures between 0.05 and 10 bar (absolute).

17. A process as claimed in claim 1, **characterized in that** that the drying temperature in the fluidized-bed drier is between 10 and 95 °C.

## Patentansprüche

1. Verfahren zur Herstellung natürlicher Antioxidantien aus Pflanzen, **dadurch gekennzeichnet, dass** es folgende Stufen umfasst:
a) Extraktion des vermahlenen Pflanzenmaterials mit einem organischen Lösungsmittel oder einem Lösungsmittelgemisch bei einer Temperatur von 0 bis 100°C unter nachfolgender rascher Abkühlung und Abtrennung der etherischen Öle,
b) Behandlung des extrahierten Pflanzenrückstandes mit Wasser oder Wasserdampf,
c) Abdampfen des Lösungsmittels oder Lösungsmittelgemisches,
d) Isolieren der antioxidativen Komponenten durch Zugabe von künstlicher Kohle zum obigen Konzentrat und Rühren, gefolgt von der Sättigung der eingeengten Lösung mit einem Inertgas und Entspannung der eingeengten gesättigten Extraktlösung,
e) Destillation der eingeengten Lösung mit Wasserdampf,
f) Abkühlen der Suspenion der extrahierten antioxidativen Komponenten und Abtrennung der Mutterlauge und
g) Wirbelschichttrocknung des Extrakts, der die antioxidativen Komponenten enthält.

2. Verfahren nach Anspruch 1, **dadurch gekennzeichnet, dass** die Pflanzen Labiatae sind.

3. Verfahren nach Anspruch 1, **dadurch gekennzeichnet, dass** die Pflanzen Rosmarin, Salbei und Thymian sind.

4. Verfahren nach Anspruch 1, **dadurch gekennzeichnet, dass** die Lösungsmittel C₁₋₅(n- oder iso-) Alkohole, Ester wie Ethylacetat, Butylacetat, Ether, Ketone wie Ethylmethylketon, Dimethylketon, Diethylketon, C₁₋₁₂-Kohlenwasserstoffe und ihre Halogenderivate, cyclische und aromatische Kohlenwasserstoffe und Gemische der erwähnten Lösungsmittel in allen Mischungsverhältnissen sind.

5. Verfahren nach Anspruch 1, **dadurch gekennzeichnet, dass** das Verhältnis zwischen dem Lösungsmittel und dem Feststoff zwischen 2 und 30 l Lösungsmittel pro kg Pflanzenmaterial beträgt.

6. Verfahren nach Anspruch 1, **dadurch gekennzeichnet, dass** die Extraktionsdauer zwischen 1 und 20 Stunden liegt.

7. Verfahren nach Anspruch 1, **dadurch gekennzeichnet, dass** das Verfahren zweistufig ist.

8. Verfahren nach Anspruch 1, **dadurch gekennzeichnet, dass** die Extraktionstemperatur die Siedetemperatur des Lösungsmittels oder Lösungsmittelgemisches ist.

9. Verfahren nach Anspruch 1, **dadurch gekennzeichnet, dass** die Extraktionstemperatur zwischen 0 und 100°C liegt.

10. Verfahren nach Anspruch 1, **dadurch gekennzeichnet, dass** nach der Extraktion die Suspension auf eine Temperatur zwischen 0 und 30°C abgekühlt wird.

11. Verfahren nach Anspruch 1, **dadurch gekennzeichnet, dass** das Verhältnis der Aktivkohle zur Lösung bei einer Aktivkohle mit einer aktiven Oberfläche von 500 bis 1900 m²/g 1 bis 250 g/L beträgt.

12. Verfahren nach Anspruch 1, **dadurch gekennzeichnet, dass** die Rührdauer 1 bis 20 Stunden beträgt.

13. Verfahren nach Anspruch 1, **dadurch gekennzeichnet, dass** die Verdampfungsdrücke P_{abs} 0,05 bis 3,00 bar betragen.

14. Verfahren nach Anspruch 1, **dadurch gekennzeichnet, dass** die Extraktlösung mit Stickstoff oder einem anderen Inertgas bei einem Überdruck von 0,1 bis 0,5 bar gesättigt wird.

15. Verfahren nach Anspruch 1, **dadurch gekennzeichnet, dass** das Gas unter Stickstoff, CO₂, Freonen oder deren Gemischen in allen Mischungsverhältnissen ausgewählt wird.

16. Verfahren nach Anspruch 1, **dadurch gekennzeichnet, dass** die Wasserdampfdestillation bei Drükken von 0,05 bis 10 bar_{abs} durchgeführt wird.

17. Verfahren nach Anspruch 1, **dadurch gekennzeichnet, dass** die Trocknungstemperatur im Wirbelschichttrockner 10 bis 95°C beträgt.

## Revendications

1. Procédé pour obtenir des antioxydants naturels à partir de végétaux, **caractérisé en ce qu'**il comprend :
a) l'extraction de la matière végétale désagrégée avec un solvant organique, ou un mélange de solvants, à une température de 0 à 100°C, le refroidissement rapide subséquent et la séparation des huiles essentielles;
b) le traitement du résidu végéter extrait, par de l'eau ou de la vapeur d'eau;
c) l'évaporation du solvant ou du mélange de solvants;
d) l'isolation des constituante antioxydants, réalisée en ajoutant du charbon de bois au concentré ci-dessus et en agitant, suivie par la saturation de la solution concentrée avec un gaz inerte et l'expansion de la solution d'extrait saturé concentré;
e) la distillation de la solution concentrée avec de la vapeur d'eau;
f) le refroidissement de la suspension des constituants antioxydants extraits et la séparation de la liqueur mère;
g) le séchage sur lit fluidisé de l'extrait qui contient les constituants antioxydants.

2. Procédé selon la revendication 1, **caractérisé en ce que** les végétaux sont les *Labiatae.*

3. Procédé selon la revendication 1, **caractérisé en ce que** les végétaux sont le romarin, la sauge et le thym.

4. Procédé selon la revendication 1, **caractérisé en ce que** les solvants sont des (n- ou iso-)alcools en C₁ à C₅, des esters tels que l'acétate d'éthyle, l'acétate de butyle, des éthers, des cétones telles que l'étnytméthylcétone, la diméthylcétone, la diéthylcétone, des hydrocarbures en C₁ à C₁₂, et leurs dérivés halogénés, des hydrocarbures cycliques et aromatiques, et des mélanges de tous les solvants susmentionnés dans toutes les proportions.

5. Procédé selon la revendication 1, **caractérisé en ce que** le rapport entre le solvant et la substance solide est compris entre 2 et 30 l du solvant par kg de la matière végétale.

6. Procédé selon la revendication 1, **caractérisé en ce que** la durée d'extraction est comprise entre 1 et 20 heures.

7. Procédé selon la revendication 1, **caractérisé en ce que** le procédé est un procédé en deux étapes.

8. Procédé selon la revendication 1, **caractérisé en ce que** la température d'extraction est la température d'ébullition du solvant du mélange de solvants.

9. Procédé selon la revendication 1, **caractérisé en ce que** la température d'extraction est comprise entre 0 et 100°C.

10. Procédé selon la revendication 1, **caractérisé en ce que**, après l'extraction, la suspension est refroidie à une température comprise entre 0 et 30°C.

11. Procédé selon la revendication 1, **caractérisé en ce que** le rapport du charbon activé à la solution, est compris entre 1 et 250 g/l, pour un charbon activé ayant une surface spécifique active comprise entre 500 et 1 900 m²/g.

12. Procédé selon la revendication 1, **caractérisé en ce que** la durée de l'agitation est comprise entre 1 et 20 heures.

13. Procédé selon la revendication 1, **caractérisé en ce que** les pressions pour la dévaporation sont comprises entre P_{abs} = 0,05 et 3,00 bars.

14. Procédé selon la revendication 1, **caractérisé en ce que** la solution de l'extrait est saturée avec de l'azote ou un autre gaz inerte à une surpression comprise entre 0,1 et 0,5 bar.

15. Procédé selon la revendication 1, **caractérisé en ce que** le gaz est choisi parmi l'azote, le dioxyde de carbone, les fréons, ou leurs mélanges, en toutes proportions.

16. Procédé salon la revendication 1, **caractérisé en ce que** la distillation à la vapeur d'eau est réalisée à des pressions comprises entre 0,05 et 10 bars (absolus).

17. Procédé selon la revendication 1, **caractérisé en ce que** la température de séchage dans le sécheur à lit fluidisé est comprise entre 10 et 95°C.
